# EUROPEAN PATENT SPECIFICATION

(11) **EP 1 203 713 B1**
(45) Date of publication and mention of the grant of the patent: **04.08.2004**
(21) Application number: 01203340.3
(22) Date of filing: 04.09.2001
(51) Int. Cl.: B62D 59/04

(54) **Auxiliary drive for a trailer**
Hilfsantrieb für einen Anhänger
Entraînement auxiliaire pour remorque

(30) Priority: 04.09.2000 NL 1016097
(43) Date of publication of application: 08.05.2002
(73) Proprietor: Reich KG, 35713 Eschenburg Wissenbach (DE)
(72) Inventor: Staats, Kees Jan, 6712 XX Bennekom (NL); Beijersbergen van Henegouwen, Cornelis Martin, 5314 AP Bruchem (NL)
(74) Representative: van Westenbrugge, Andries

(56) References cited:
- FR-A- 2 786 456
- US-A- 4 974 695

## Description

The present invention relates to an auxiliary drive for a trailer, such as a caravan, comprising a motor, a first frame component that can be rigidly fixed to the chassis of said trailer, and a second frame component that is arranged such that it can be moved with respect to the first frame component, a drive roller connected to said motor being rotatably attached to said second frame component, said second frame component being movable such that said drive roller can be pressed against a wheel of said caravan, the first and second component being hingeably connected in accordance with exclusively a single axis.

An auxiliary drive of this type is disclosed in FR 2 786 456 A.

Problems arise especially when manoeuvring heavy trailers or caravans that are not coupled to a vehicle that is provided with a drive motor. These problems are solved by means of an auxiliary drive, it being possible to move such a trailer with the aid of drive rollers that are driven by motors and can be pressed against the wheels of such a trailer. This applies in particular to caravans that have to be moved on campsites and in caravan parks. Numerous constructions are proposed in the prior art for pressing the relevant drive rollers, connected to drive motors, against the wheels. One problem is that such a construction must, on the one hand, provide adequate contact pressure with the wheel but, on the other hand, must be sufficiently compact in order not to have an adverse effect on the ride height of the caravan or other trailer. Account can be taken of this if the auxiliary drive is already incorporated during the manufacture of a caravan. However, it has been found that many such auxiliary drives are installed at a later date. At that point in time little room is available, especially in the case of caravans that are provided with a wide variety of additional accessories such as tanks, auxiliary braking systems, levelling devices, spare wheel mounts and the like.

US 4 974 695 A discloses an auxiliary drive for a motorcycle in order to be able to reverse this motorcycle. This auxiliary drive consists of an electric motor that can be tilted about a vertical axis in order to come into engagement with the rear wheel.

The aim of the present invention is to provide an auxiliary drive which is particularly compact and consequently of universal use.

This aim is achieved with an auxiliary drive as described above in that said axis is essentially vertical when the drive is mounted on said trailer and said motor is mounted on one side of said hinge and said drive roller is mounted on the other side of said hinge.

In contrast to all prior art constructions, movement of the contact roller towards and away from the wheel essentially takes place in the horizontal plane. Consequently, the space requirement in the vertical direction does not increase or decrease during the movement of the contact roller and a particularly compact construction is obtained. As a result of mounting the motor and drive roller on opposite sides of the hinge, guaranteed engagement and guaranteed disengagement are ensured with a relatively compact construction and an adequate stroke of the drive roller and the motor is prevented from being directly exposed to (salt) water, sand and the like originating from the road surface. Furthermore, as a result of this construction the motor can be positioned relatively high in the chassis of, for example, a caravan.

Such a construction can be installed particularly easily below or integrated in the chassis of, for example, a caravan.

According to an advantageous embodiment of the invention, locking means are present for locking said first and second frame component with respect to one another in the drive position of said drive roller. Preferably, said locking means comprise an articulated arm mechanism, that is to say a mechanism that is moved beyond a dead point, after which the roller is continuously pressed under a certain force into contact with the wheel concerned. The drive for said locking means and/or movement of the contact roller can comprise any construction known in the state of the art. The various features can be implemented using electric motors. Operation with the aid of a cable on both wheels simultaneously is also possible. Another possibility is to make use of an operating lever for both wheels together or for each of the wheels independently. Such an operating lever can, moreover, be provided with retaining means to define the non-drive position, that is to say the travelling position.

According to a further advantageous embodiment of the invention, the motor is some distance away from the drive roller. Connection is by means of a relatively compact drive shaft. This drive shaft can be integrated with the drive roller. As a result of this construction it is possible to mount the relatively somewhat larger motor on one side of the chassis member and the relatively larger drive roller on the other side thereof. Only the drive shaft has to run beneath such a chassis member. Optionally it would be possible to make a relatively small opening in such a chassis member in order to pass such a drive shaft through it. Facilities can optionally be provided for positioning the motor in different positions with respect to the drive shaft and the chassis.

According to a further advantageous embodiment, the second frame component comprises a section within which the drive shaft is located.

The invention will be explained in more detail below with reference to an illustrative embodiment shown in the drawing. In the drawing:
Fig. 1 shows, diagrammatically, a plan view of a caravan frame provided with an auxiliary drive according to the invention;
Fig. 2 shows a perspective view of the auxiliary drive of Fig. 1 in the drive position thereof;
Fig. 3 shows a view corresponding to Fig. 2 in the non-drive position; and
Fig. 4 shows a detail of the blocking mechanism for the operating lever.

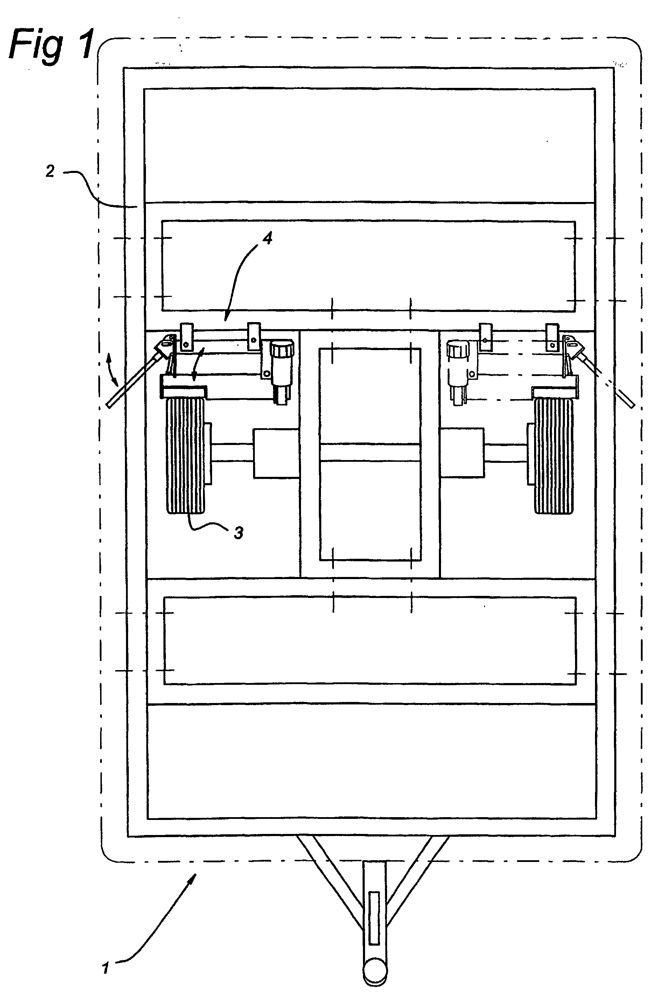

In Fig. 1 the base periphery of a caravan is indicated by 1. It must be emphasised that the invention is applicable to any vehicle not provided with a motor drive. Caravan 1 comprises a chassis 2, to which wheels 3 are attached. An auxiliary drive for said wheels is indicated by 4.

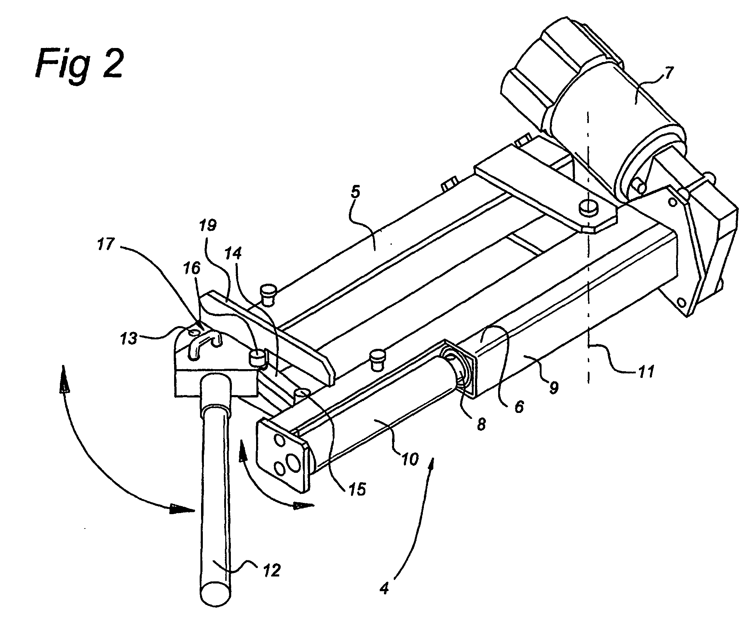

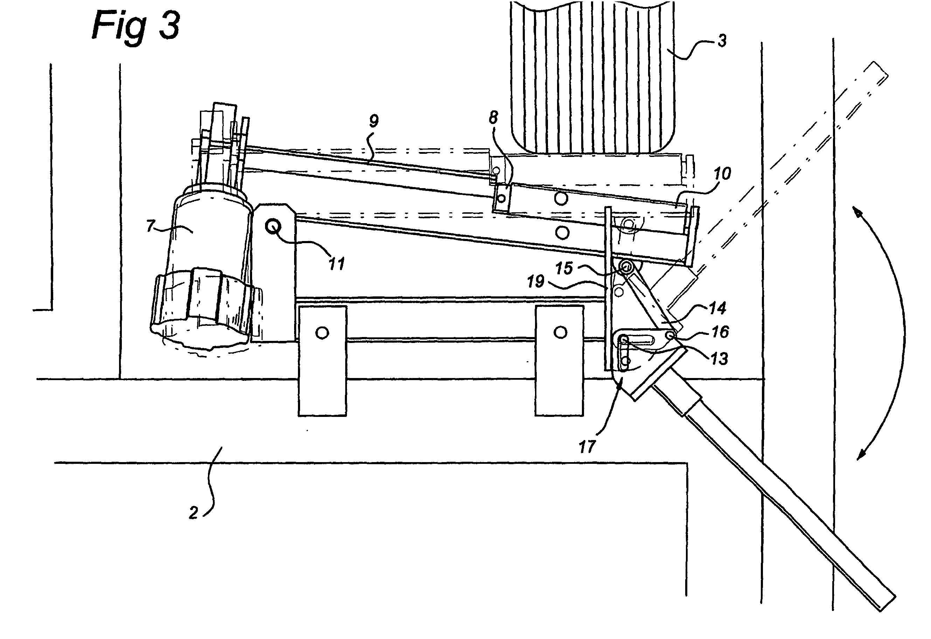

It can be seen from Figs 2 and 3 that the auxiliary drive 4 consists of a first frame component 5 that can be rigidly fixed to the chassis 2 of the caravan by means of bolts, straps and the like. A second frame component 6 is hingeably arranged on the first frame component 5. The hinge pin or axis is indicated by 11 and this extends essentially perpendicularly to the plane of the drawings in Figs 2 and 3, that is to say is essentially vertical in the position of use. The second frame component 6 is provided on one side with a motor 7. This either can be arranged in a fixed position with respect to the second frame component or can be mounted such that it can be moved with respect to the second frame component. On the other side the second frame component is provided with a drive roller 10 rotatably accommodated therein. Connection between the drive roller 10 and motor 7 is by means of a drive shaft 8 that runs in the tubular section 9 of the second frame component 6. The motor and associated circuitry can comprise any construction known in the state of the art. In particular, this is provided according to the invention with "soft start" electronics, as a result of which a much more fluid movement is obtained when manoeuvring. This is in contrast to the jolting movement that takes place in the state of the art. It will be understood that a corresponding construction can be used for the other wheel. With the aid of electronic circuits it is possible to move a left-hand and right-hand wheel simultaneously at the same speed and in the same direction or at different speeds in the same direction, to move only one wheel and to keep the other wheel stationary and to move in different directions at the same or different speeds.

The first frame component 5 is provided with a detachable operating lever 12 that with the aid of a hinge 13 can be moved with respect thereto. A toggle joint lever arm 14 is arranged on the operating lever 12, which toggle joint lever arm 14 at one end is hingeably attached to hinge 16 on operating lever 12 and at the other end is hingeably attached via hinge 15 to the second frame component 6. A plate 19 is present, with which operating lever 12 is in contact and which is provided with a cut-out for accommodating tubular section 9. In the position shown by broken lines in Fig. 3 the drive roller 10 is in contact with the wheel 3. As a result of the position of the hinges 13, 16 and 15, and more particularly the fact that hinge point 16 is located beyond the line drawn through the hinge points 13 and 15, the position shown in Fig. 2 is stable.

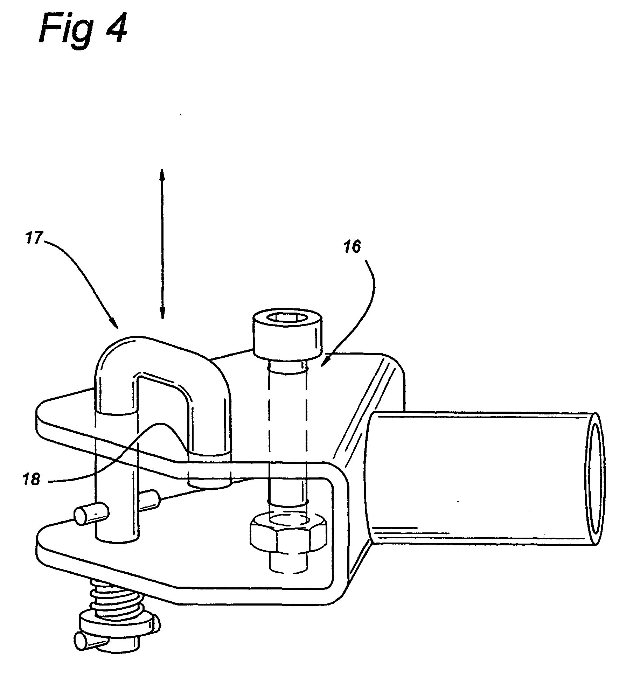

This does not apply to the position in continuous lines shown in Fig. 3, in which the drive roller 10 has been retracted from the wheel 3. In this position separate locking is necessary, which is implemented with the aid of retainer 17, consisting of a U-shaped part 17. One arm of the U-shaped part 17 can be accommodated in a hole 18 in a plate attached to the first frame component 5. The various features are shown in detail in Fig. 4.

As a result of moving the second frame component 6, in which the drive roller 10 is rotatably accommodated, about axis 11 exclusively in the horizontal plane, this frame component 6 can be arranged as close as possible to the underside of the caravan. As a result the ride height thereof does not decrease or decreases to a negligible extent. This is in contrast to other constructions with which movement in the vertical plane also takes place, in addition to a movement in the horizontal direction. The ride height is reduced by at most a few centimetres with the construction according to the present invention.

Although the invention has been described above with reference to a preferred embodiment, it must be understood that numerous modifications can be made thereto which are immediately obvious to those skilled in the art after reading the above description and fall within the scope of the appended claims.

## Claims

1. Auxiliary drive (4) for a trailer (1), such as a caravan, comprising a motor (7), a first frame component (5) that can be rigidly fixed to the chassis (2) of said trailer, and a second frame component (6) that is arranged such that it is can be moved with respect to the first frame component (5), a drive roller (10) connected to said motor being rotatably attached to said second frame component, said second frame component being movable such that said drive roller can be pressed against a wheel (3) of said caravan, the first and second component being hingeably connected in accordance with exclusively a single axis (11), **characterised in that** said axis (11) is essentially vertical when the drive is mounted on said trailer and said motor (7) is mounted on one side of said hinge and said drive roller (10) is mounted on the other side of said hinge.

2. Auxiliary drive according to Claim 1, comprising locking means (14) for locking said first and second frame component with respect to one another in at least the drive position of said drive roller.

3. Auxiliary drive according to one of the preceding claims, wherein said locking means comprise a toggle joint lever mechanism.

4. Auxiliary drive according to one of the preceding claims, wherein hinging operating means (12) for moving said second frame component are attached to said first frame component.

5. Auxiliary drive according to one of the preceding claims, wherein said motor is connected to a drive shaft (8), which, in turn, is connected to said drive roller.

6. Auxiliary drive according to Claim 5, wherein said motor is fixed to said second frame component.

7. Auxiliary drive according to Claim 6, wherein said motor can be fixed in several positions with respect to the second frame component.

8. Auxiliary drive according to one of Claims 5 - 7, wherein said second frame component comprises a section and said drive shaft extends within said section (9).

## Patentansprüche

1. Hilfsantrieb (4) für einen Anhänger (1), wie zum Beispiel ein Wohnwagen, mit einem Motor (7), einer ersten Rahmenkomponente (5), die starr an dem Fahrgestell (2) von dem Anhänger angebracht sein kann, sowie einer zweiten Rahmenkomponente (6), die dazu ausgestaltet ist, um relativ zu der ersten Rahmenkomponente (5) bewegt zu werden, einer mit dem Motor verbundenen Antriebswalze (10), die drehbar an der zweiten Rahmenkomponente angebracht ist, wobei die zweite Rahmenkomponente so bewegbar ist, dass die Antriebswalze gegen ein Rad (3) des Wohnwagens gedrückt werden kann, wobei die erste und die zweite Komponente lediglich durch eine einzige Achse (11) gelenkig verbunden sind, **dadurch gekennzeichnet, dass** diese Achse (11) im wesentlichen vertikal verläuft, wenn der Antrieb an dem Anhänger montiert ist, und der Motor (7) an einer Seite des Gelenks montiert ist und die Antriebswalze (10) an der anderen Seite des Gelenks montiert ist.

2. Hilfsantrieb nach Anspruch 1, mit Arretiereinrichtungen (14), um die erste und die zweite Rahmenkomponente relativ zueinander in zumindest der Antriebs-Position der Antriebswalze zu arretieren.

3. Hilfsantrieb nach einem der vorhergehenden Ansprüche, bei dem die Arretiereinrichtungen einen Kniehebelmechanismus beinhalten.

4. Hilfsantrieb nach einem der vorhergehenden Ansprüche, bei dem die gelenkigen Betätigungseinrichtungen (12) zum Bewegen der zweiten Rahmenkomponente an der ersten Rahmenkomponente angebracht sind.

5. Hilfsantrieb nach einem der vorhergehenden Ansprüche, bei dem der Motor mit einer Antriebswelle (8) verbunden ist, die wiederum mit der Antriebswalze verbunden ist.

6. Hilfsantrieb nach Anspruch 5, bei dem der Motor an der zweiten Rahmenkomponente befestigt ist.

7. Hilfsantrieb nach Anspruch 6, bei dem der Motor an verschiedenen Stellen relativ zur zweiten Rahmenkomponente befestigt sein kann.

8. Hilfsantrieb nach einem der Ansprüche 5-7, bei dem die zweite Rahmenkomponente einen Abschnitt aufweist und die Antriebswelle in diesem Abschnitt (9) verläuft.

## Revendications

1. Transmission auxiliaire (4) pour une remorque (1), telle qu'une caravane, comportant un moteur (7), un premier élément de bâti (5) qui peut être fixé rigidement au châssis (2) de ladite remorque, et un second élément de bâti (6) qui est agencé de façon à pouvoir être déplacé par rapport au premier élément de bâti (5), un rouleau (10) d'entraînement relié audit moteur et monté de façon à pouvoir tourner sur ledit second élément de bâti, ledit second élément de bâti étant mobile de manière que ledit rouleau d'entraînement puisse être appliqué sous pression contre une roue (3) de ladite caravane, lesdits premier et second éléments étant reliés de façon articulée selon exclusivement un seul axe (11), **caractérisée en ce que** ledit axe (11) est essentiellement vertical lorsque la transmission est montée sur ladite remorque et ledit moteur (7) est monté sur un premier côté de ladite articulation et ledit rouleau (10) d'entraînement est monté sur l'autre côté de ladite articulation.

2. Transmission auxiliaire selon la revendication 1, comportant un moyen (14) de verrouillage destiné à verrouiller lesdits premier et second éléments de bâti l'un par rapport à l'autre dans au moins la position d'entraînement dudit rouleau d'entraînement.

3. Transmission auxiliaire selon l'une des revendications précédentes, dans lequel ledit moyen de verrouillage comporte un mécanisme à levier à joint à genouillère.

4. Transmission auxiliaire selon l'une des revendications précédentes, dans laquelle des moyens (12) de manoeuvre d'articulation destinés à déplacer ledit second élément de bâti sont montés sur ledit premier élément de bâti.

5. Transmission auxiliaire selon l'une des revendications précédentes, dans laquelle ledit moteur est relié à un arbre (8) d'entraînement qui, lui-même, est relié audit rouleau d'entraînement.

6. Transmission auxiliaire selon la revendication 5, dans laquelle ledit moteur est fixé sur ledit second élément de bâti.

7. Transmission auxiliaire selon la revendication 6, dans laquelle ledit moteur peut être fixé en plusieurs positions par rapport audit second élément de bâti.

8. Transmission auxiliaire selon l'une des revendications 5 à 7, dans laquelle ledit second élément de bâti comporte un profilé et ledit arbre d'entraînement s'étend à l'intérieur dudit profilé (9).
